# EUROPEAN PATENT APPLICATION

(11) **EP 4 678 348 A1**
(43) Date of publication of application: **14.01.2026**
(21) Application number: 24767317.1
(22) Date of filing: 23.02.2024
(51) Int. Cl.: B25J 9/16, B25J 11/00, B25J 13/00

(54) **METHOD OF DETERMINING TRAVEL ROUTE BY DEVICE IN WIRELESS COMMUNICATION SYSTEM AND DEVICE THEREFOR**

(30) Priority: 03.03.2023 KR 20230028727
(71) Applicant: LG ELECTRONICS, INC., Seoul 07336 (KR)
(72) Inventor: KIM, Heejin, Seoul 06772 (KR)
(74) Representative: Mooser, Sebastian Thomas
(86) International application number: PCT/KR2024/002389
(87) International publication number: WO 2024/186028

(57) **Abstract**

Disclosed are a method of determining a travel route by a device in a wireless communication system according to various embodiments and a device therefor. The method may comprise the steps of: detecting an entry into a particular area; predicting whether the traveling of a first type object located in the particular area is obstructed by a first travel route of the device for the particular area; and on the basis of prediction that the traveling of the first type object is obstructed and reception of a message including a second travel route related to a second type object identical to the device, changing the first travel route to a third travel route following the second travel route.

## Description

### TECHNICAL FIELD

The present disclosure relates to a method for determining a travel path by a device in a wireless communication system, and a device therefor.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

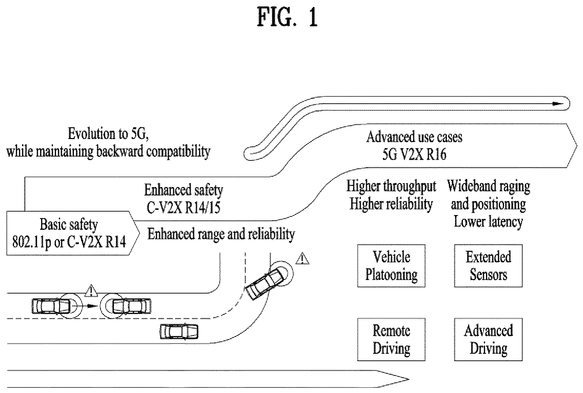

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

### DISCLOSURE

### TECHNICAL PROBLEM

An object of the present disclosure is to provide a method for determining a travel path more accurately and efficiently.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### TECHNICAL SOLUTION

According to an aspect, a method for determining a travel path by a device in a wireless communication system may include detecting entry into a specific area, predicting whether travel of a first-type object located in the specific area is obstructed by a first travel path of the device in the specific area, and based on the prediction of obstruction of the travel of the first-type object and reception of a message including a second travel path related to a second-type object which is the same as the device, changing the first travel path to a third travel path following the second travel path.

Alternatively, the first-type object may be a vulnerable road user (VRU), and the second-type object may be an unmanned ground robot (UGR).

Alternatively, based on a change in a travel state of the first-type object caused by the first travel path being predicted, the device may predict that the travel of the first-type object is obstructed by the first travel path.

Alternatively, the method may further include receiving a VRU message including mobility information about the first-type object from the first-type object, and whether the travel of the first-type object is obstructed may be predicted based on the mobility information in the VRU message.

Alternatively, based on the message including the second travel path related to the second-type object not being received, the device may change the first travel path to a travel path in which obstruction of the travel of the first-type object is not predicted, among a plurality of available travel paths in the specific area.

Alternatively, based on the first travel path being changed to the third travel path, the device may initiate transmission of a message including information about the third travel path and the first-type object.

Alternatively, the device may discontinue following the second travel path based on exiting the specific area.

Alternatively, the specific area may be an area where a sidewalk or a crosswalk for pedestrian movement is located.

According to another aspect, a computer-readable recording medium having a program recorded thereon for performing the method for determining a travel path may be provided.

According to another aspect, a device for performing the method for determining a travel path may be provided.

According to another aspect, a processing device for controlling a device that performs the method for determining a travel path may be provided.

According to another aspect, a method for setting a travel path for a device by a network in a wireless communication system may include detecting that the device enters a specific area, predicting whether travel of a first-type object located in the specific area is obstructed by a first travel path of the device in the specific area, and based on the prediction of obstruction of the travel of the first-type object and reception of a message including a second travel path related to a second-type object which is the same as the device, transmitting, to the device, a message requesting changing of the first travel path to a third travel path following the second travel path.

According to another aspect, a computer-readable recording medium having a program recorded thereon for performing the method for setting a travel path for a device may be provided.

According to another aspect, a network for performing the method for setting a travel path for a device may be provided.

According to another aspect, a processing device for controlling a network that performs the method for setting a travel path for a device may be provided.

### ADVANTAGEOUS EFFECTS

According to an embodiment of the present disclosure, a travel path may be determined more accurately and efficiently in a wireless communication system.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the present disclosure and are incorporated in and constitute a part of this application, illustrate embodiments of the present disclosure and together with the description serve to explain the principle of the present disclosure.
FIG. 1 is a diagram for explaining by comparing V2X communication based on RAT before NR and V2X communication based on NR.
FIG. 2 illustrates the structure of an LTE system to which embodiment(s) are applicable.
FIG. 3 illustrates the structure of an NR system to which embodiment(s) are applicable.
FIG. 4 illustrates the structure of an NR radio frame to which embodiment(s) are applicable.
FIG. 5 illustrates the slot structure of an NR frame to which embodiment(s) are applicable.
FIG. 6 shows a communication structure providable in a 6G system, based on an embodiment of the present disclosure.
FIG. 7 shows an electromagnetic spectrum, based on an embodiment of the present disclosure.
FIG. 8 shows an example of an NTN typical scenario based on a transparent payload, based on an embodiment of the present disclosure.
FIG. 9 shows an example of an NTN typical scenario based on a regenerative payload, based on an embodiment of the present disclosure.
FIG. 10 shows an example of a sensing operation, based on an embodiment of the present disclosure.
FIG. 11 illustrates a radio protocol architecture for SL communication.
FIG. 12 illustrates UEs performing V2X or SL communication.
FIG. 13 illustrates resource units for V2X or SL communication.
FIG. 14 shows an example of a BWP, based on an embodiment of the present disclosure.
FIG. 15 shows a procedure of performing V2X or SL communication by a UE based on a resource allocation mode, based on an embodiment of the present disclosure.
FIG. 16 is a diagram illustrating a method for changing a travel path of an unmanned ground robot based on prediction of pedestrian traffic obstruction.
FIG. 17 is a diagram illustrating a method for traveling without obstructing travel paths of pedestrians by a plurality of unmanned ground robots.
FIG. 18 is a diagram illustrating a method for determining a travel path in a specific area by a device.
FIG. 19 is a diagram illustrating a method for setting a travel path for a device in a specific area by a network.
FIG. 20 illustrates a communication system applied to the present disclosure.
FIG. 21 illustrates wireless devices applicable to the present disclosure.
FIG. 22 illustrates another example of a wireless device to which the present disclosure is applied.
FIG. 23 illustrates a vehicle or an autonomous driving vehicle applied to the present disclosure.

### DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

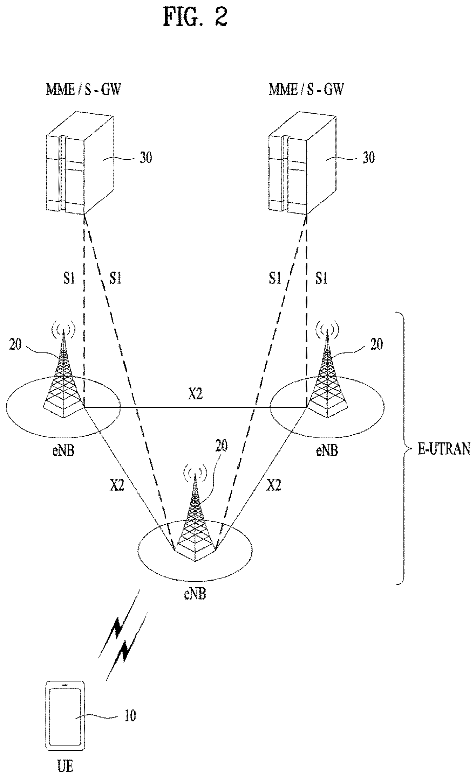

For clarity of explanation, LTE-A or 5G NR is mainly described, but the technical spirit of the embodiment(s) is not limited thereto
FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node BS (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

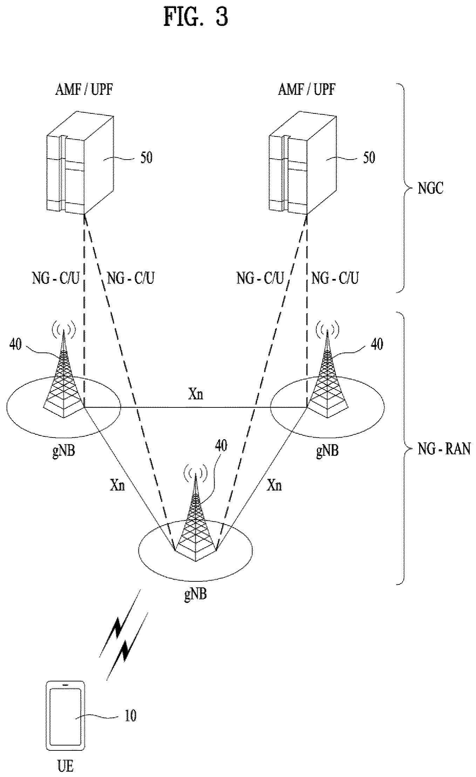

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

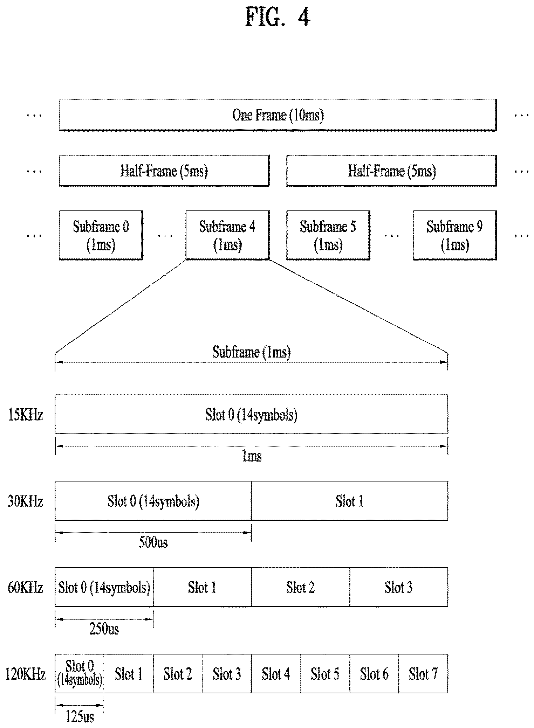

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame N^{frame,u}ₛₗₒₜ, and the number of slots per subframe N^{subframe,u}ₛₗₒₜ according to an SCS configuration µ in the NCP case.

**[Table 1]**

| SCS (15*2u) | N^{slot}_{symb} | N^{frame,u}ₛₗₒₜ | N^{subframe,u}ₛₗₒₜ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

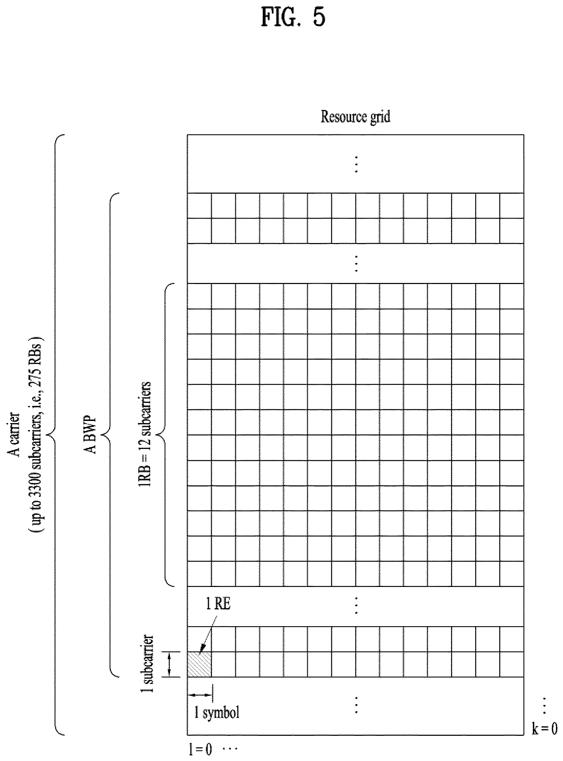

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

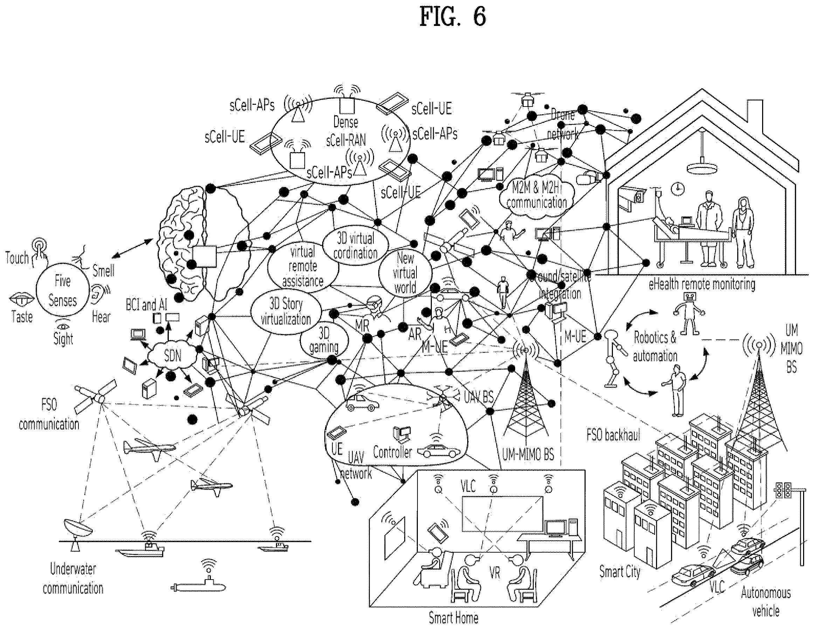

FIG. 6 shows a communication structure providable in a 6G system, based on an embodiment of the present disclosure. The embodiment of FIG. 6 may be combined with various embodiments of the present disclosure.

In 6G, new network characteristics may be as follows.
- Satellites integrated network
- Connected intelligence: Unlike the wireless communication systems of previous generations, 6G is innovative and wireless evolution may be updated from "connected things" to "connected intelligence". Al may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

Core implementation technology of 6G system is described below.
- Artificial Intelligence (Al): When Al is introduced to communication, real-time data transmission may be simplified and improved. Al may determine a method of performing complicated target tasks using countless analysis. That is, Al may increase efficiency and reduce processing delay. Operation consuming time such as handover, network selection, and resource scheduling immediately performed by using Al. Al may also play an important role in M2M, machine-to-human, and human-to-machine. In addition, Al may be a prompt communication in brain computer interface (BCI). An Al based communication system may be supported by metamaterial, intelligence structure, intelligence network, intelligence device, intelligence cognitive radio, self-maintaining wireless network, and machine learning.

Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity to RF.

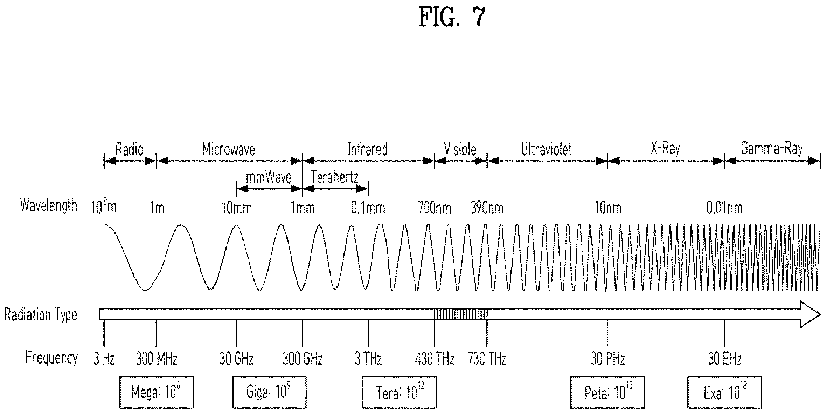

FIG. 7 shows an electromagnetic spectrum, based on an embodiment of the present disclosure. The embodiment of FIG. 7 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

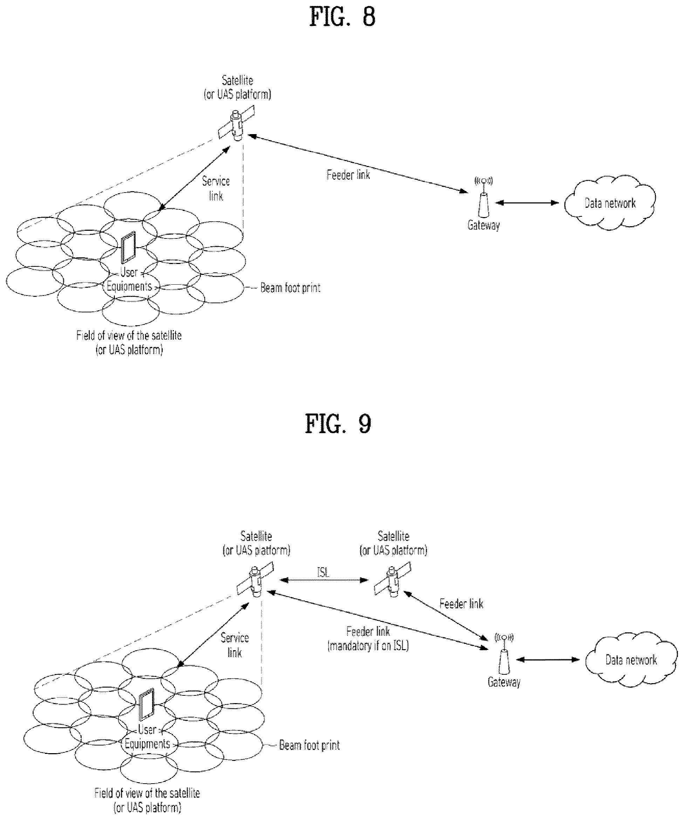

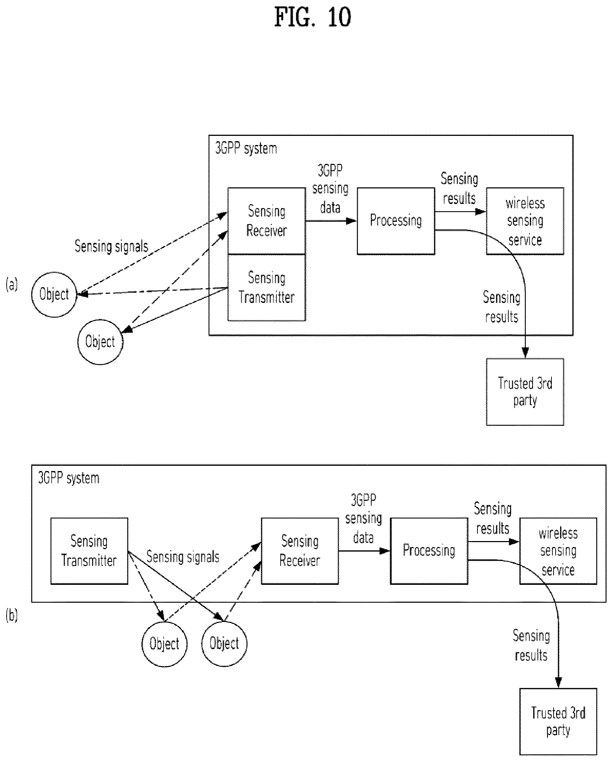

Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.
- Non-terrestrial networks (NTN): An NTN may refer to a network or a network segment that utilizes radio frequency (RF) resources aboard a satellite (or an unmanned aerial system (UAS) platform). FIG. 8 shows an example of an NTN typical scenario based on a transparent payload, based on an embodiment of the present disclosure. FIG. 9 shows an example of an NTN typical scenario based on a regenerative payload, based on an embodiment of the present disclosure. The embodiment of FIG. 8 or FIG. 9 may be combined with various embodiments of the present disclosure. Referring to FIG. 8, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 9, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGS. 8 and 9 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.
- Integrated sensing and communication (ISAC): Wireless sensing is a technology enabler to acquire information about characteristics of the environment and/or objects within the environment that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 10 shows an example of a sensing operation, based on an embodiment of the present disclosure. The embodiment of FIG. 10 may be combined with various embodiments of the present disclosure. Specifically, (a) of FIG. 10 shows an example of sensing (e.g., monostatic sensing) with co-located sensing receiver and sensing transmitter, and (b) of FIG. 10 shows an example of sensing (e.g., bistatic sensing) with separated sensing receiver and sensing transmitter.

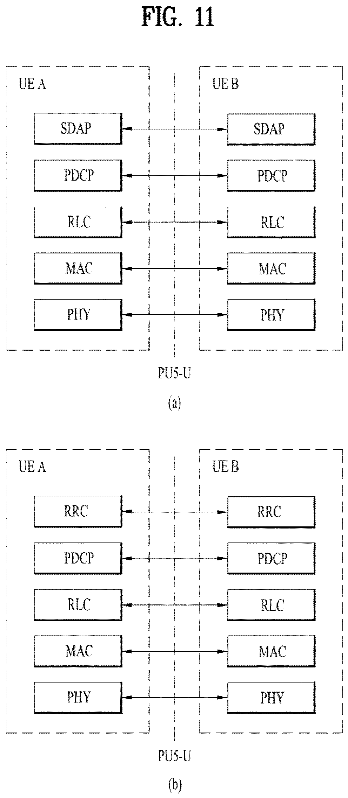

FIG. 11 illustrates a radio protocol architecture for SL communication. Specifically, FIG. 11-(a) shows a user plane protocol stack of NR, and FIG. 11-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

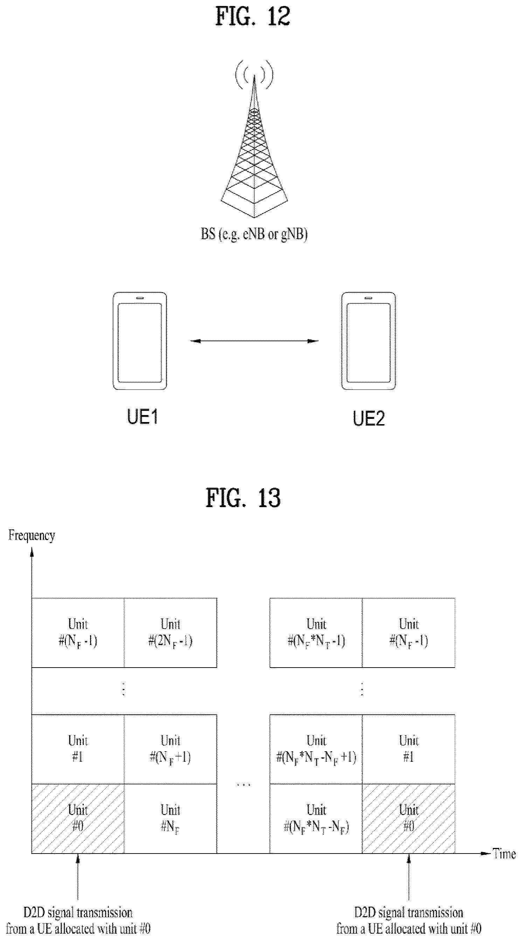

FIG. 12 illustrates UEs performing V2X or SL communication.

Referring to FIG. 12, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 13 illustrates resource units for V2X or SL communication.

Referring to FIG. 13, the frequency resources of a resource pool may be divided into NF sets, and the time resources of the resource pool may be divided into NT sets. Accordingly, a total of NF * NT resource units may be defined in the resource pool. FIG. 13 shows an exemplary case where the resource pool is repeated with a periodicity of NT subframes.

As shown in FIG. 13, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.
(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.
(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.
(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

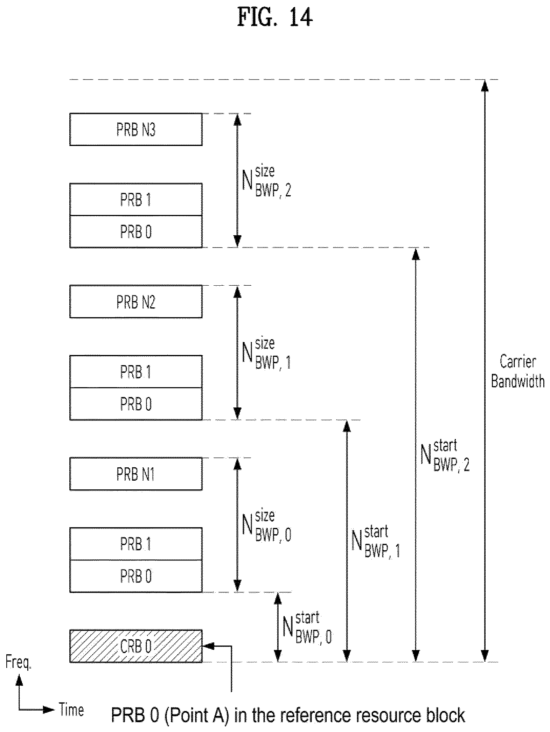

FIG. 14 shows an example of a BWP, based on an embodiment of the present disclosure. The embodiment of FIG. 14 may be combined with various embodiments of the present disclosure. It is assumed in the embodiment of FIG. 14 that the number of BWPs is 3.

Referring to FIG. 14, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start} _{BWP} from the point A, and a bandwidth N^{size} _{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

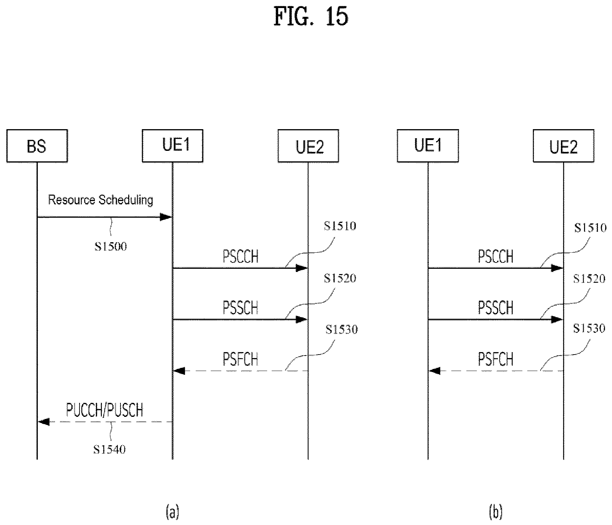

FIG. 15 shows a procedure of performing V2X or SL communication by a UE based on a resource allocation mode, based on an embodiment of the present disclosure. The embodiment of FIG. 15 may be combined with various embodiments of the present disclosure.

Referring to (a) of FIG. 15, in a resource allocation mode 1, a base station may schedule SL resource(s) to be used by a UE for SL transmission. For example, in step S1500, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S1510, the first UE may transmit a PSCCH (e.g., sidelink control information (SCI) or 1st-stage SCI) to a second UE based on the resource scheduling. In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE. For example, HARQ feedback information (e.g., NACK information or ACK information) may be received from the second UE through the PSFCH. In step S1540, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 15, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subChannel(s). For example, in step S1510, a first UE which has selected resource(s) from a resource pool by itself may transmit a PSCCH (e.g., sidelink control information (SCI) or 1st-stage SCI) to a second UE by using the resource(s). In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE.

Referring to (a) or (b) of FIG. 15, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 15, in step S1530, the first UE may receive the PSFCH. For example, the first UE and the second UE may determine a PSFCH resource, and the second UE may transmit HARQ feedback to the first UE using the PSFCH resource.

Referring to (a) of FIG. 15, in step S1540, the first UE may transmit SL HARQ feedback to the base station through the PUCCH and/or the PUSCH.

The sidelink described above may be defined as communication between UEs or direct communication between UEs. In this case, the PSCCH may be defined as a physical control channel for communication between UEs, the PSSCH may be defined as a physical data channel or physical shared channel for communication between UEs, and the PSFCH may be defined as a physical feedback transmission channel between UEs.

### Delivery Robots/Unmanned Driving Robots

Due to societal issues/changes such as increasing last-mile delivery costs, rising labor expenses, and the ongoing COVID-19 pandemic, the emergence of unmanned ground robots (UGRs) providing services like food/grocery delivery, road maintenance/cleaning, parcel delivery, and patrolling is accelerating. Concurrently, regulatory discussions regarding the allowance and conditions for UGRs on public roads have also begun actively in various countries.

For instance, in the United States, Virginia was the first state to pass a law permitting the use of personal delivery devices (PDDs) in 2017. Currently, 14 states, including Pennsylvania, Texas, Utah, Florida, and Washington, have legalized the use of delivery robots. In Pennsylvania, delivery robots should be capable of both autonomous and remote driving, and they are restricted to 12mph in pedestrian areas (e.g., crosswalks and sidewalks) and 35mph on roadways and shoulders. Further, when the delivery robot anticipates a collision with/obstruction of a pedestrian and a cyclist during traveling in a pedestrian area, it should yield to the pedestrian and the cyclist to prevent the collision/obstruction, thereby ensuring their right-of-way. While specific regulations vary slightly across US states, a common provision universally applies: when traveling in pedestrian areas, delivery robots should grant right-of-way to pedestrians or yield to pedestrians. This principle is largely consistent with regulations concerning delivery robots (or ground/public road driving robots) in Japan and the UK. In South Korea, there are currently no specific regulations for ground/driving robots, meaning such delivery or unmanned driving robots may be classified as vehicles. Consequently, their operation on sidewalks and crosswalks is not permitted under the Pedestrian Safety Act.

However, in 2021, the Ministry of Trade, Industry and Energy deliberated/approved the "Robot Industry Proactive Regulatory Innovation Roadmap Implementation Plan" for the proactive elimination of regulations. According to this roadmap, outdoor delivery robots are planned to be allowed in urban parks starting in 2022, on sidewalks from 2023, and high-speed operation demonstration and system improvement are planned for 2025. Therefore, in South Korea, delivery robots will soon share public roads with pedestrians and/or vehicles, and similar to the US, UK, and Japan, delivery robots will be able to coexist with pedestrians/vehicles on public roads. Accordingly, research into efficient and safe methods for operating these delivery or unmanned driving robots in conjunction with pedestrians may be necessary.

Therefore, a method for traveling and traversing by an UGR (e.g., delivery robot) to ensure the right-of-way of a pedestrian and/or a vehicle on a public road (e.g., sidewalk, crosswalk, shoulder, and lane) will be described below in detail.

A "UGR" may refer to a robot that travels on the ground without human occupants (a driver and/or other passengers). This type of UGRs may travel through fully autonomous driving technology or remote driving/control technology, or by selecting/combining these two driving technologies based on a surrounding/travel condition of the robot. Further, UGRs may correspond to various types of robots depending on services/roles they are designed/produced to perform. For example, UGRs may be classified as door-to-door food delivery robots, robots for delivering goods from convenience stores to customers' homes, waste collection robots, road repair robots, or patrol robots, based on a service provided. The proposed methods described below may be applied regardless of the services, speeds, or sizes of robots, not limited to robots providing specific services.

Additionally, "pedestrian traffic obstruction by an unmanned robot" as used herein may signify a concept/event distinct from typical vehicle-pedestrian or pedestrian-pedestrian collisions (or collision risks). While pedestrian traffic obstruction may imply a potential collision risk between an unmanned robot and a pedestrian, it more specifically refers to a state where a robot located in the pedestrian's intended path occupies/travels within a road/space the pedestrian wishes to traverse, thereby preventing the pedestrian from proceeding, or a state where such an event is anticipated. Further, pedestrian traffic obstruction by an unmanned robot may encompass not only the robot occupying/stopping in a space the pedestrian intends to use, but also situations where the robot's travel speed is too fast or too slow, causing difficulty or a sense of threat for the pedestrian. Additionally, when the robot and the pedestrian intend to travel on the same path (almost) simultaneously, and their paths overlap, the robot may be perceived as not obstructing the pedestrian's movement only when it yields the right-of-way to the pedestrian. In other words, pedestrian traffic obstruction by an unmanned robot does not directly imply a collision situation/event between the unmanned robot and a pedestrian, but rather a state/event where the movement path/direction/speed of the pedestrian needs to be altered due to the traveling of the unmanned robot.

Further, while methods for traveling on and traversing a public road by a UGR or an unmanned robot (hereinafter, a "UGR") to ensure pedestrian right-of-way, these methods may be applied equally/similarly to private property. Moreover, they may be applied equally/similarly for the purpose of "avoiding/reducing a collision risk between a robot and a pedestrian (or vehicle/bicycle(/motorcycle/kickboard/electric two-wheeled vehicle) occupant/vulnerable road user (wheelchair occupant))" rather than solely for "ensuring pedestrian right-of-way."

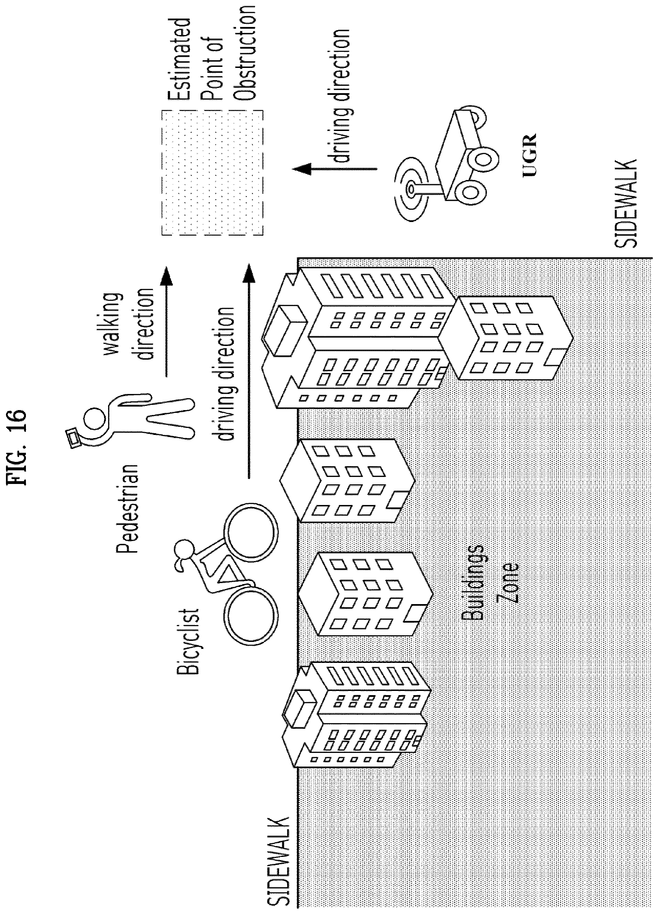

FIG. 16 is a diagram illustrating a method for changing the travel path of a UGR based on prediction of pedestrian traffic obstruction.

Referring to FIG. 16, the UGR may travel on a sidewalk where pedestrians are present. When the UGR anticipates that its travel on the sidewalk will obstruct pedestrian traffic currently or in the near future (within a specific time), it may alter its movement path to avoid hindering pedestrians (and/or bicycle/kickboard/wheelchair occupants) using the sidewalk. In this case, the UGR may determine whether it will obstruct pedestrian traffic or whether to modify/change its movement path/travel path based on at least one of the following conditions.
1. The existence or absence of alternative path(s) other than its current location, a current set travel path, and a current travel path (i.e., whether alternative paths to which its travel path is to be changed are detected).
2. Whether its current location and/or travel path is obstructing a nearby pedestrian and the level of obstruction (i.e., whether its current travel path is obstructing a nearby pedestrian's path, and if so, calculating the degree of obstruction).
3. Whether changing to a feasible alternative path also obstructs a nearby pedestrian and the level of obstruction (and whether the pedestrian obstruction level is lower than that of the current path) (i.e., whether traveling on an alternative path may still obstruct other nearby pedestrians, and if so, calculating the degree of obstruction).
4. The current location/travel path of an adjacent robot, and/or the feasibility of changing/modifying its own travel path (i.e., determining the possibility of changing the travel path to an alternative path).
5. When the number of surrounding pedestrians and/or their density/distribution (the density/distribution of pedestrians located in a specific area or per unit area) is equal to or larger than a preset threshold.
6. In the case where the current location of an adjacent pedestrian is identifiable, when the distance (in a horizontal/vertical/height direction) between the adjacent pedestrian and the robot is equal to or less than a preset threshold.
7. When the type/width/speed limit of a road on which the robot is traveling is equal to or larger than (or equal to or less than) a preset threshold:
   - (Type of road) When the UGR is traveling on a shoulder, a sidewalk, or a crosswalk (or a one-way street), together with a pedestrian.
   - When the UGR (or pedestrian) enters a shoulder/sidewalk/crosswalk, or leaves a shoulder/sidewalk/crosswalk (or [x] seconds before/after a time point of entering/leaving a shoulder/sidewalk/crosswalk, or [x] meters before/after a location of entering/leaving a shoulder/sidewalk/crosswalk).
   - (Width of road) When the width of the road is [x] meters or less.
8. Whether there is space on a sidewalk for the robot to travel/stop to avoid obstructing a pedestrian's path.
9. Whether the UGR is not capable of traveling on a sidewalk to avoid a pedestrian, or whether the robot may merge onto a roadway and/or a shoulder within a preset time/distance (e.g., [x] seconds or [x] meters): this relates to the current position/speed/heading/acceleration of the UGR and a surrounding map (e.g., surrounding terrain and a road configuration).

Information about the above-described traveling environment (road type, road width, and speed limit) may be obtained ① through infra-to-robot communication (information provided by a local government/police/road operator), ② by sensor equipment such as a sensor/camera of the UGR, ③ by receiving a message transmitted by an adjacent VRU/vehicle/robot/infrastructure or by a subscribed service provider of the robot via direct communication and/or cellular communication, or ④ from a map received by (or loaded onto) the UGR.

For convenience of description, conditions 1 to 9 described above will hereinafter be defined and described as "pedestrian traffic obstruction conditions."

Additionally, an operation of "determining/modifying a travel path" may be based on at least one of the following examples.
1. An originally set travel path is modified to an alternative path (minimizing sidewalk travel).
2. The UGR travels along a (nearly) identical path as the original path, but changes a road type (e.g., sidewalk -> roadway, sidewalk -> shoulder, or shoulder -> roadway): For example, when the UGR traveling on a sidewalk identifies that the sidewalk is too narrow and there is no suitable specific space to stop to avoid pedestrians, the UGR may change the road type as described above.
3. The UGR travels along a (nearly) identical path as the original, but only within a limited specific area on a sidewalk (moving to that area if not currently located there) to secure/maximize the width/range of the sidewalk accessible to pedestrians.
   - Although the specific area may be predefined as a (semi-fixed) location on the sidewalk by regulations or a road operator, it may also be a location/space (a non-fixed location/space) determined to minimize pedestrian traffic obstruction by the UGR (at a specific moment/time interval).
4. An operation of stopping/postponing entry into a travel path to move to a UGR waiting area that is not a general road (or is designated on a public road) or a road/sidewalk (expected to obstruct pedestrian traffic), temporarily stopping for the purpose of stopping/postponing entry, and/or adjusting a travel speed/direction/acceleration, to avoid getting closer than a preset specific distance to a pedestrian whose path is expected to be obstructed.

The above-described operations may only apply in a specific area (geofenced area) designated by a robot service operator/local government/road operator/government, and/or in an area/region where regulations regarding the robot's obligation to prioritize pedestrian right-of-way are applied. The UGR may be provided with information about the specific area (i.e., the area where the regulations are applied) in advance, or may receive it from an infrastructure/service provider/nearby ITS station/base station, when entering the specific area (or when the UGR travels in the specific area).

For convenience of description, methods 1 to 4 for determining/modifying a travel path described above will hereinafter be defined and described as "travel path modification methods."

The above operations may be defined as illustrated in Table 5 below.

**[Table 5]**

| |
|---|
| 1. A UGR is approaching a sidewalk/crosswalk. |
| 2. The UGR receives information about VRUs and the sidewalk/crosswalk (e.g., location of VRUs, density/distribution of the VRUs, the number of VRUs, width/length of the sidewalk/crosswalk) from infrastructure or the VRUs. |
| 3. (when the UGR compares its planned path and the location/distribution of the VRUs) If it is expected that the UGR will disturb pedestrian traffic in the pedestrian area, UGR changes its route/operation to avoid the obstruction |
| - E.g., by making a detour around the area crowded by VRUs |
| - E.g., by pausing its operation (or stopping entering the sidewalk) and waiting until the VRUs on the sidewalk pass by |
| * UGR: unmanned ground robot |

Further, to prevent the UGR from obstructing the passage of a pedestrian (and/or a bicycle/kickboard/wheelchair occupant) using a sidewalk, a cloud/MEC/server operated by the service operator/local government/road operator/government may directly determine whether the travel of the UGR on the sidewalk will obstruct the passage of the pedestrian currently or in the future (within a specific time). When there is a risk of pedestrian traffic obstruction, the cloud/MEC/server operated by the service operator/local government/road operator/government may determine that the travel path of the UGR and/or a subsequent operation (e.g., stopping and waiting to enter the sidewalk, evading to a specific area/direction, or the like) based on at least one of the "travel path determination/modification" operations described above, and transmit path information regarding the determined traveling method (e.g., speed/acceleration/heading), location, and alternative path of the UGR to the UGR. In this case, the path information may be represented based on a path prediction format (a path point and/or a time taken for the UGR to reach the path point) included in an intelligent transport systems (ITS) message such as an ETSI VRU awareness message (VAM) and a SAE personal safety message (PSM). An exemplary server operation related to this may be as illustrated in Table 6 below.

**[Table 6]**

| |
|---|
| 1. A UGR is approaching a pedestrian area, e.g., sidewalk/crosswalk. (or, A server detects that the UGR is approaching the pedestrian area) |
| 2. A server of robot-related service provider can provide the appropriate trajectory and maneuver instructions to the UGR to help the efficient operation of the UGR in the pedestrian area. |
| 3. UGR follows the instruction provided by the server to observe the regulations. |

A detailed description will be given below of a method in which when UGRs are concentrated in a specific area (a sidewalk, a crosswalk, or the like), the UGRs determine their travel paths for avoiding pedestrian traffic obstruction or perform an operation for avoiding pedestrian traffic obstruction.

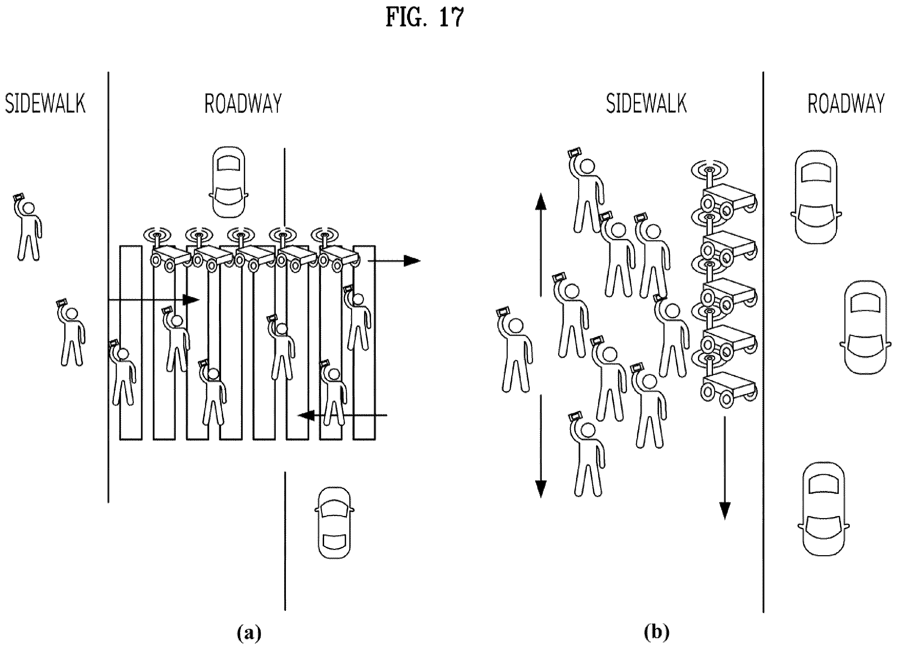

FIG. 17 is a diagram illustrating a method for traveling without pedestrian traffic obstruction by a plurality of UGRs.

Referring to FIGS. 17(a) and 17(b), a plurality of UGRs and a plurality of pedestrians may be located on a crosswalk and/or a sidewalk. When the plurality of UGRs travel on the crosswalk in this manner, each of the UGRs may determine its travel path individually based on its own criterion/method to avoid pedestrian traffic obstruction. In this case, there is a higher possibility that pedestrian passage will be obstructed due to the scattered traveling/waiting of the plurality of UGRs. Therefore, when the plurality of URGs travel on the sidewalk/crosswalk, they need to gather and perform cluster driving/platooning in a narrow/limited (roadway) area in similar directions/at similar speeds on the sidewalk (following adjacent robots).
1. The travel directions/speeds/areas of the UGRs are coordinated based on a travel path and/or intent exchange (through direct communication or cellular communication) between the UGRs.
   (1) (Intent Exchange) Transmitting and receiving messages to (mutually) propose/accept whether to travel together in a certain direction/area on the sidewalk (i.e., cluster driving), whether to continue traveling on the sidewalk, and a time/distance for cluster driving in the direction/area.
      - Prior to proposing/accepting cluster driving, the UGRs may exchange travel intent information, such as their current locations, travel paths, speeds, headings, and accelerations.
      - The proposal/acceptance of cluster driving may be performed based on the travel intent information, such as their current locations, travel paths, speeds, headings, and accelerations, between the UGRs.
   (2) One UGR may act as a leader and coordinate a travel direction/speed/area for pedestrian avoidance with at least one other UGR. In this case, the operation of the leading UGR may be similar to clustering or platooning.
2. Pedestrian avoidance may occur without direct information/intent exchange regarding coordination of travel directions/speeds/areas on a sidewalk among a plurality of UGRs (for the purpose of preventing/minimizing pedestrian obstruction).
   (1) The UGR may determine whether to follow (immediately behind) a preceding UGR traveling ahead in its travel direction (i.e., to perform cluster driving/platooning) based on at least one of the following conditions (to yield right-of-way to a pedestrian).
      - ① When the UGR performs platooning by following a preceding UGR, whether an area occupied and/or the degree of distribution of a plurality of UGRs on the sidewalk decreases (or whether information about the distribution of the plurality of UGRs on the sidewalk decreases by a preset threshold or more due to the platooning).
      - ② Whether the similarity between the travel path of the UGR and the travel path of the preceding UGR is equal to or larger than a preset threshold: The UGR may determine the similarity to its own travel path based on information about path prediction (or a future travel path) included in a message received from the preceding UGR. For example, if [X] or more of path points representing the path prediction are within a predetermined error range ([x] meters), the UGR may determine that it has a travel path similarity equal to or larger than the preset threshold with respect to the preceding UGR.
      - ③ When the difference in distance/direction between a (final/intermediate) destination of the UGR and a (final/intermediate) destination of the preceding UGR is equal to or less than a preset threshold difference.
      - ④ When the type of a road on which the UGR is traveling is a specific type, or when the width/speed limit of the road is equal to or less than (or equal to or larger than) a preset threshold: For example, when the road is a shoulder, a sidewalk, a crosswalk, or a one-way street, or when the width of the road being shared with a pedestrian is less than a specific width ([x] meters).
      - ⑤ When there is no space on the sidewalk/road for traveling/stopping to avoid pedestrians (or when its area/region is narrow), or when the distance (in a horizontal/vertical/height direction) to a detected pedestrian (closest to the robot) is equal to or less than a preset threshold distance.
      - ⑥ When the number of UGRs traveling on the sidewalk, determined based on information obtained by the UGR from its sensor/camera (and/or a surrounding vehicle/pedestrian/robot/infrastructure), is larger than a (preset) specific number, when the number of pedestrians traveling on the sidewalk is larger than a (preset) specific number, when the ratio of pedestrians to UGRs traveling on the sidewalk is equal to or larger than/equal to or less than a (preset) specific value, and/or when the distribution (degree of scattering) of pedestrians on the sidewalk (specifically in a certain area) is equal to or larger than a specific distribution.
      - ⑦ When a distance/time for which the UGR should travel on the sidewalk (while obstructing pedestrian movement) is equal to or larger than a (preset) specific distance/time.
      - ⑧ When the distance between the UGR and the preceding UGR is equal to or less than a (preset) specific distance, or when the distance to a trailing UGR traveling behind the UGR is equal to or less than a (preset) specific distance, or when the number of UGRs traveling within [x] meters of the preceding UGR (or trailing UGR) is equal to or larger than a (preset) threshold number.
      - ⑨ When the UGR is not capable of merging onto a roadway and/or a shoulder within a preset time/distance (e.g., [x] seconds or [x] meters).
      - ⑩ In the case where the UGR performs platooning/cluster driving behind the preceding UGR, when the probability of pedestrian traffic obstruction decreases by a specific threshold or more, compared to not performing platooning/cluster driving, or when the probability of pedestrian traffic obstruction is equal to or less than a preset probability.

For convenience of description, conditions ① to ⑩ described above for determining whether to travel (immediately behind) a preceding UGR traveling ahead in a travel direction of a UGR (i.e., whether to perform platooning) will hereinafter be defined and described as "preceding UGR following conditions."

(3) A cloud/MEC/server operated by the service operator/local government/road operator/government may directly determine whether cluster driving/platooning of UGRs is required (to yield right-of-way to pedestrians) based on at least one of the preceding UGR following conditions (① to ⑩) described above. When cluster driving/platooning of UGRs is required, the cloud/MEC/server may provide the following information to the UGRs.

Platooning information required for cluster driving/platooning: For example, the information required for cluster driving/platooning may include the IDs of surrounding UGRs traveling in front/behind/left/right of each UGR, and information about travel attributes (e.g., current/future paths, speeds/accelerations/headings, and absolute/relative locations) of the surrounding robots. An UGR receiving the platooning information may determine whether to join (or exit) the cluster driving, and its travel direction/speed/acceleration/path during the cluster driving, based on the platooning information.
- Instruction information for direct instructions on cluster formation/traveling/disbandment: When a traveling method identical/similar to tele-operated driving is applied to the UGRs while the cloud/MEC/server manages the cluster/cluster formation/traveling/disbandment of the UGRs, the cloud/MEC/server may transmit instruction information related to tele-operated driving to the UGRs.

Further, in relation to performing cluster driving of UGRs for yielding right-of-way to pedestrians as described above, a "triggering time point/condition for robot cluster driving" needs to be defined. At least one of the following (1) Alternative A or (2) Alternative B may be applied for the "triggering time point/condition for robot cluster driving." Different detailed terminal operations and robot-to-robot interaction/signaling may be required in each of the following methods (1) and (2).

### (1) Alternative A

When the UGR travels in an environment where it may potentially affect/obstruct pedestrian traffic (e.g., a sidewalk, a crosswalk, or a shoulder), it may adjust its path and/or travel direction to perform cluster driving with surrounding robots traveling in the same environment. For example, even if the UGR determines that there are no pedestrians within a certain distance/area around it, or that in spite of the presence of pedestrians, the situation does not obstruct their passage, the UGR may adjust/change its travel path/travel direction to perform cluster driving/platooning with the surrounding UGRs, when traveling on a specific type of road such as a sidewalk, a crosswalk, or a shoulder.
1) For example, when a road on which the UGR is traveling satisfies condition ④, ⑤, or ⑨ among the afore-described preceding UGR following conditions (① to ⑩), the UGR may trigger cluster driving by following a preceding UGR (regardless of other conditions). That is, cluster driving for platooning behind a preceding UGR may be triggered, when the UGR satisfies condition ④ that its current (planned) road is a shoulder, a sidewalk, or a crosswalk (or when the UGR shares a one-way street with pedestrians), or the width of the road is [x] meters or less, condition ⑤ that there is no space on a sidewalk/road for traveling/stopping to avoid pedestrians (or the size/area of a space is small), or the distance (in a horizontal/vertical/height direction) to a detected pedestrian (closest to the robot) is equal to or less than a preset threshold distance, and/or condition ⑨ that the UGR is not capable of merging onto a roadway and/or a shoulder within a preset time/distance (e.g., [x] seconds or [x] meters)). Herein, the UGR may obtain surrounding information regarding whether condition ④, ⑤, or ⑨ is satisfied from a map app (or a navigation app), a camera/sensor, or a message from an adjacent ITS station/UGR.
2) An operation related to the triggering time point/condition for robot cluster driving described above may be defined as illustrated in Table 7 below.

**[Table 7]**

| |
|---|
| - When a UGR is entering a certain geographical area, the robot receives information about how the robot can follow a robot in front of it from infrastructure, server (of service provider) or other robots, and the UGR tries to minimize the area occupied by robots by running after other robots on the sidewalk/crosswalk (even though currently UGRs do not obstruct pedestrian traffic). The geographical area includes sidewalks/crosswalks/right side of roadways. |
| - The information sent from infrastructure or other robots can include position/speed/heading/acceleration of the robot(s) running in front of the ego-UGR, speed/heading/acceleration recommended for ego-UGR |

3) When the UGR determines to perform cluster driving, it may determine which preceding UGR to follow for cluster driving/platooning and in which direction/area, based on at least one of the following methods.
- ① Cluster driving method by "direct intent exchange" among the UGRs to determine a cluster travel path and a travel area on the sidewalk.
- For example, when the UGR enters or is located in an area where it needs to perform cluster driving (to yield right-of-way to pedestrians), the UGR (or a leading UGR or a UGR acting as the leader of the cluster) may periodically/aperiodically transmit a message including its presence and location, and information about a cluster driving area on the sidewalk. An adjacent UGR that receives the message from the UGR may perform cluster driving/platooning by following its preceding UGR.
- Alternatively, a roadside unit (RSU) installed near a sidewalk/crosswalk/shoulder and/or a provider (a server/cloud/MEC owned/operated by the provider) of a service to which the robot is subscribed may detect a UGR that has entered a specific area where cluster driving is required (to yield right-of-way to pedestrians). Upon detection of the UGR entering the specific area, the RSU and/or the service provider may periodically/aperiodically transmit a message including the presence/location of the detected UGR, information about a cluster driving area where cluster driving is performed on the sidewalk (or a recommended cluster driving area recommended by the RSU or provided by the local government/police/road operator). Other UGRs that receive the message through direct/cellular communication may perform cluster driving by following their preceding robots (or the leader of the cluster driving). Herein, the RSU or the server/cloud/MEC of the service provider may detect the UGR that has entered or is staying in a specific area where cluster driving is required, based on information detected by installed sensors/cameras and/or information obtained from messages received from surrounding terminals/surrounding UGRs.
- ② Cluster driving method among UGRs "without direct intent exchange."
- For example, the UGR may determine whether to perform cluster driving based on information obtained from its own sensor/camera, and/or from messages received from surrounding vehicles/pedestrians/robots/infrastructure. Specifically, when the UGR detects a preceding UGR (in the same direction) traveling ahead of it in a specific area such as a sidewalk, it may move to a lane/cluster driving area where the detected preceding UGR is traveling, and perform cluster driving. On the contrary, when no preceding UGR (in the same direction) is detected ahead of the UGR, the UGR may maintain its current travel path, or travel at the innermost or outermost boundary of the sidewalk, which is the specific area (or a specific traveling area on the sidewalk, which has been preset/agreed upon). When no preceding UGR is detected, a specific traveling area where the UGR travels may be provided by the local government/police/road operator/service provider (the provider of the service to which the UGR is subscribed) (information about the specific traveling area may be pre-stored in the UGR, or received by the UGR through direct/cellular communication).

4) Features/Advantages: The method described above may be a proactive measure against potential pedestrian traffic obstruction. Even if the UGR does not (quickly) perceive pedestrians around it, or if a pedestrian suddenly appears, the probability of the UGR obstructing pedestrian passage may be reduced.

### (2) Alternative B

When the specific UGR determines that there are no pedestrians within a certain distance/area around it, or that even if there are pedestrians, its presence does not immediately obstruct their passage, the UGR may travel along its planned travel path. On the contrary, "when the specific UGR determines that there are pedestrians within the certain distance/area around it, or that it obstructs the passage of a specific pedestrian," the UGR may perform cluster driving.
1) Features/Advantages: When the specific UGR travels on a sidewalk/crosswalk/shoulder without pedestrian traffic obstruction, it may operate efficiently along its optimized travel path.
2) For example, the specific UGR may initiate cluster driving by following a nearby preceding UGR on the sidewalk/crosswalk/shoulder, when it satisfies one of conditions ① and ⑤~⑩ among the afore-described "preceding UGR following conditions ① to ⑩)." In other words, the specific UGR may determine whether it is obstructing the passage of nearby pedestrians (in a specific area such as a sidewalk/crosswalk/shoulder) based on the afore-described conditions ① and ⑤~⑩.
   A. Additionally, conditions for triggering cluster driving of UGRs may be i) when the UGR is traveling in an environment where it may obstruct pedestrian traffic (related to conditions ④, ⑤, and ⑨ among the preceding UGR following conditions), ii) when the travel path of the UGR is determined to obstruct pedestrian traffic, and iii) when conditions ① and ⑤~⑩ among the preceding UGR following conditions (① to ⑩) are satisfied.
   B. The UGR may determine whether the environment may obstruct pedestrian traffic and whether the conditions for performing cluster driving are satisfied, based on information sensed by its own sensor or based on messages from surrounding devices (an RSU, other UGRs, other ITS stations (e.g., vehicles, infrastructure, and VRUs including pedestrians and cyclists), and/or service providers). For example, the UGR may determine the characteristics (e.g., the speed, acceleration, heading, and so on) of a pedestrian and/or a surrounding environment based on the information obtained from the sensor/messages from the surrounding devices, and based on the determined pedestrian characteristics/surrounding environment, the UGR may determine whether it is obstructing the passage of the pedestrian and whether the conditions for performing cluster driving are satisfied.
   C. Regarding preceding UGR following condition ⑥, only some of a plurality of UGRs traveling on the sidewalk may perceive that their travel is obstructing the passage of a pedestrian. For example, a UGR traveling directly behind the pedestrian may recognize/detect the pedestrian, but a UGR approaching the pedestrian at a relatively fast speed from a considerable distance may not yet perceive the pedestrian. Considering this, the UGR that has perceived the pedestrian may share information about the perceived pedestrian with UGRs that have not perceived the pedestrian, using at least one of the following information exchange methods.
      a. i) A preceding UGR that has perceived a pedestrian may provide information about the presence/location of the pedestrian (and/or the preceding UGR) and a specific cluster area related to cluster driving to a trailing UGR entering the specific area. The trailing UGR may transmit a message confirming the receipt of the information (via V2V or V2N2V), a response message regarding joining cluster driving, or a message including information (locations/Station IDs (temp IDs)) about other trailing UGRs that will follow it during cluster driving to the preceding UGR. At this time, the preceding UGR may transmit the information to the trailing UGR that has not perceived the pedestrian or to trailing robots regardless of whether they have perceived the pedestrian or not.
         - The preceding UGR may identify trailing UGRs that have not perceived the pedestrian, based on messages transmitted by trailing UGRs (e.g., messages including information about pedestrians/objects detected using cameras/sensors by the trailing UGRs) and/or information obtained from a server/cloud/MEC/smart RSU to which the preceding UGR is connected. That is, the preceding UGR may identify whether the trailing UGRs following it have perceived the pedestrian whose passage is obstructed by the UGR, through information transmitted by the trailing UGRs. The preceding UGR may provide information about the presence/location of the pedestrian (and/or the preceding UGR) and a specific cluster area related to cluster driving to the trailing UGRs that have not perceived the pedestrian, among the trailing UGRs. Alternatively, when the UGRs initiate/perform cluster driving to prevent pedestrian traffic obstruction, a message including information related to cluster driving may be transmitted. For example, only when the distance to a robot traveling behind the UGR is equal to or less than a (preset) specific distance (based on information from the camera/sensor of the UGR or received from other robots/vehicles/pedestrians/infrastructure), and it is determined that if the trailing robot proceeds along its current travel path/direction, it may not join a cluster driving formation, it may inform the trailing robot of the need to join cluster driving and information about an area used for cluster driving on the sidewalk.
         - Alternatively, in the case where the preceding UGR provides cluster driving information (information about the presence/location of the pedestrian (and/or the preceding UGR) and a specific cluster area related to cluster driving) to the trailing UGRs regardless of whether they have perceived the pedestrian, when the preceding UGR initiates cluster driving, it may broadcast a message including the cluster driving information to surrounding UGRs, or groupcast the message including the cluster driving information only to surrounding UGRs predicted to be within a specific distance/radius of the pedestrian (typically predicted by considering a maximum distance at which a robot may detect a pedestrian using a sensor/camera).
   D. When the passage of the pedestrian will be obstructed by the UGR (and/or when it is anticipated that the UGR will have difficulty perceiving the pedestrian passage obstruction will occur), the RSU and/or the server may transmit a message including the cluster driving information to UGRs near the pedestrian. The RSU may be an RSU installed near a sidewalk/crosswalk/shoulder, and the server may be a server/cloud/MEC owned/operated by a provider of a service to which the UGR is subscribed.
      - In this case, the specific cluster area on the sidewalk where cluster driving will be performed, included in the cluster driving information, may be an area directly determined by the RSU/server/cloud/MEC of the service provider based on a current robot/pedestrian travel state on the sidewalk, or a (semi-fixed) area designated by the local government/police/road operator.
   E. For example, the UGR may perform an operation as illustrated in Table 8 below.

**[Table 8]**

| |
|---|
| Robots travel in the pedestrian area based on their own decision and planned path as long as there is no obstruction of the pedestrian traffic (and/or there is no pedestrian in the area). Only when there is a risk of the obstruction (and/or there is a pedestrian in the area), platooning-like operation is triggered for UGRs running in the pedestrian area. For example, |
| - the presence of pedestrian(s) can be detected by UGRs using their sensor information and/or using information (e.g., VRU awareness, sensor data) received from RSU, other UGRs, ITS stations in the vicinity, or service provider. |
| - Once the operation is triggered, the triggered event can be reported by a UGR (or RSU, ITS stations, or service provider) to other UGRs running on sidewalks/crosswalks to ask for their cooperation in the virtual group-based driving. Also, for more efficient virtual group-based driving of UGRs, the following information can be shared with other UGRs. |
| - the presence/location/speed/heading of the detected pedestrian(s) |
| - Location/ID/speed/heading/acceleration/planned path of a UGR (that is in the lead) for the virtual group-based driving |

Obviously, examples of the proposed methods described above may also be included as one of methods for implementing the present disclosure and thus considered as a type of proposed methods.

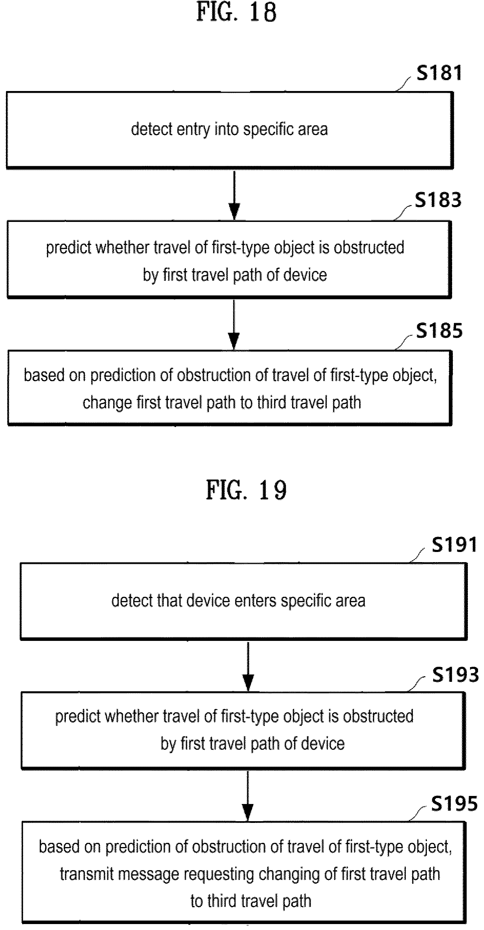

FIG. 18 is a diagram illustrating a method for determining a travel path in a specific area by a device.

Referring to FIG. 18, the device may detect entry into a specific area (S181). For example, the device may detect entry into the specific area through a global positioning system (GPS) sensor or a navigation app. The specific area may be an area where a sidewalk or crosswalk for pedestrian movement exists, as described above, and the device may perceive the specific are by receiving information about the specific area in advance from a server connected to the device or by using the GPS sensor or a camera.

Subsequently, the device may predict whether travel of a first-type object located in the specific area is obstructed by a first travel path of the device in the specific area (S183). Specifically, the device may predetermine the first travel path as a path in the specific area. When the device enters the specific area, it may detect whether the first-type object (VRU, pedestrian, or bicycle) exists in the specific area. Upon detection of the first-type object, the device may predict whether its travel in the first travel path will obstruct the travel of the first-type object. For example, the device may predict whether the travel of the first-type object is obstructed by the first travel path, based on sensing information about the first-type object and/or mobility information (a location, a speed, an acceleration, a travel direction, a predicted path, and so on) included in a message (VRU message) transmitted by the first-type object. That is, the device may predict whether the first travel path of the first device will obstruct the travel of the first-type object, based on at least one of the pedestrian traffic obstruction conditions (1 to 9) described above. For example, when predicting that the travel of the device in the first travel path will cause a change in the travel speed, travel direction, and/or travel path of the first-type object, the device may predict that its travel in the first travel path will obstruct the travel of the first-type object.

Thereafter, the device may change the first travel path to a third travel path based on the prediction that the travel of the first-type object will be obstructed by the first travel path (S185). The third travel path may be determined based on at least one of the travel path modification methods (1 to 4) described above, or determined as a path that follows a travel path of a preceding UGR, when the preceding UGR following conditions (① to ⑩) are satisfied. For example, the device may determine a travel path based on at least one of the travel path modification methods (1 to 4) as the third travel path, or determine a travel path that follows the travel path of the preceding UGR as the third path, based on whether a message including a travel path for a second-type object (UGR) that is the same as the device is received. In other words, the third travel path may be determined as a travel path based on at least one of the travel path modification methods described above, or a travel path that follows the preceding UGR, based on whether a message is received from the second-type object (another UGR or another unmanned ground robot) that is the same as the device.

Specifically, when receiving a message including information about a second travel path of the second-type object (i.e., when receiving a message from a preceding UGR, which is the second-type object), the device (or a trailing UGR) may determine the third travel path as a path that follows the second travel path included in the message, rather than using the above-described travel path modification methods. Alternatively, when the device receives the message including the information about the second travel path of the second-type object, and at least one of the preceding UGR following conditions (① to ⑩) is satisfied, the device may determine the third travel path as the path that follows the second travel path included in the message, rather than using the above-described travel path modification methods. For example, when the device receives a message including the second travel path, and a probability of obstructing the travel/passage of the first-type object (pedestrian) is less than a specific threshold probability during platooning based on the second travel path, the device may change the first travel path to the third travel path that follows the second travel path.

In other words, the prediction that the travel of the first-type object will be obstructed by the first travel path and the reception of a second message including the second travel path may be a trigger condition for the device to perform cluster driving/platooning with the second-type object. On the contrary, when the device receives no message from the second-type object, the device may directly determine the third travel path that does not obstruct the travel of the first-type object, using at least one of the travel path modification methods (1 to 4).

Alternatively, based on the first travel path being changed to the third travel path, the device may transmit a message including the third travel path and mobility information such as the location/speed of the first-type object. Alternatively, when the device leaves the specific area during traveling in the third travel path, it may stop the platooning in the second travel path of the second-type object. The device may be a UGR that is the same as the second-type of object, as described above.

As such, even if a UGR is allowed to travel on a sidewalk/crosswalk, the proposed invention may effectively ensure pedestrian passage/right-of-way by changing the travel path of the UGR or allowing the UGR to perform platooning behind a preceding UGR, when it is predicted that the travel of the UGR will obstruct pedestrian passage/travel. Further, the proposed invention may minimize pedestrian traffic obstruction caused by an environment where UGRs are concentrated, by enabling a preceding UGR on the sidewalk/crosswalk to transmit a message about changing its travel path to protect pedestrian passage, thereby inducing a trailing UGR to perform platooning/cluster driving behind the preceding UGR.

FIG. 19 is a diagram illustrating a method for setting a travel path for a device in a specific area by a network.

Referring to FIG. 19, the network may detect that the device enters a specific area (S191). For example, the network may periodically receive a message including mobility information (a speed, a travel direction, a travel path (e.g., a first travel path), an angular velocity, and so on) from the device. The network may determine whether the device has entered the specific area based on the mobility information about the device. The specific area may be an area where a sidewalk or crosswalk for pedestrian movement exists, as described above.

Subsequently, the network may predict whether travel of a first-type object located in the specific area is obstructed by the first travel path of the device in the specific area (S193). Specifically, the network may predict whether the travel of the first-type object will be obstructed by the first travel path of the device that has entered the specific area. For example, the network may predict whether the travel of the first-type object is obstructed by the first travel path based on sensing information about the first-type object and/or mobility information (a location, a speed, an acceleration, a travel direction, a predicted path, and so on) included in a message (VRU message) transmitted by the first-type object. That is, the network may predict whether the first travel path of the first device will obstruct the travel of the first-type object based on at least one of the pedestrian traffic obstruction conditions (1 to 9) described above. For example, the network may predict whether the travel of the device in the first travel path will change the speed, direction, and/or path of the first-type object, and when there is a possibility of changing the speed, direction, and/or path of the first-type object, it may predict that the travel of the device in the first travel path will obstruct the travel of the fist-type object.

Thereafter, the network may transmit, to the device, a message instructing it to change the first travel path to a third travel path, based on the prediction that the travel of the first-type object will be obstructed by the first travel path (S195). The third travel path may be determined based on at least one of the travel path modification methods (1 to 4) described above, or as a path that follows a travel path of a preceding UGR, when the preceding UGR following conditions (① to ⑩) are satisfied. For example, the network may determine the third travel path as a travel path based on at least one of the travel path modification methods (1 to 4) or as a travel path that follows the travel path of the preceding UGR, based on whether a message including a travel path of a second-type object which is the same as the device is received. In other words, the third travel path may be determined as a travel path based on at least one of the travel path modification methods described above, or as a travel path that follows the preceding UGR, based on whether a message is received from the second-type object (another UGR) which is the same as the device.

Specifically, when receiving a message including information about a second travel path of the second-type object (i.e., when receiving a message from the preceding UGR, which is the second-type object), the network may determine the third travel path as a path that follows the second travel path included in the message, rather than using the above-described travel path modification methods. In this case, the network may transmit, to the device, a message requesting the device to change the first travel path of the device to the third travel path that follows the second travel path.

Alternatively, the network may request the device to transmit a message including the third travel path and mobility information such as the location/speed of the first-type object, based on the change of the first travel path to the third travel path.

When the device leaves the specific area while traveling in the third travel path, the network may instruct/request the device to stop following the second travel path of the second-type object.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

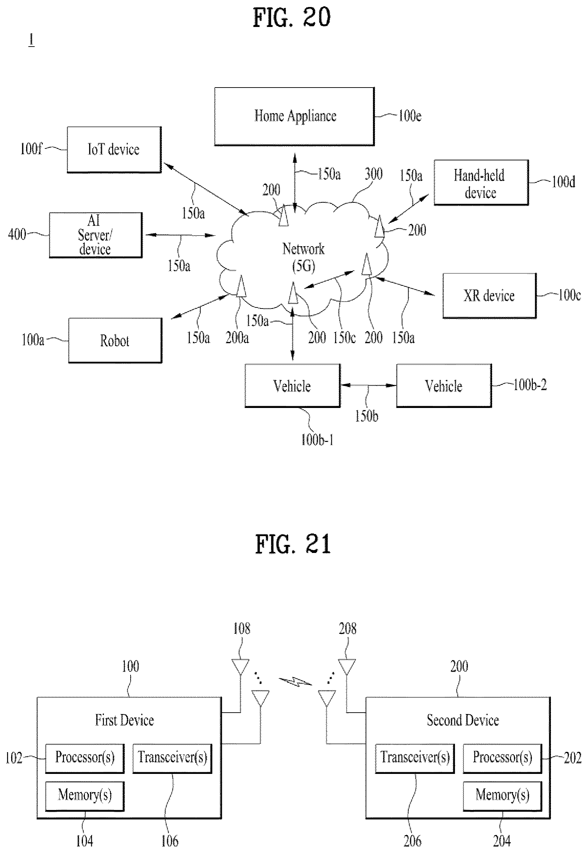

FIG. 20 illustrates a communication system applied to the present disclosure.

Referring to FIG. 20, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality

(XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

FIG. 21 illustrates a wireless device applicable to the present disclosure.

Referring to FIG. 21, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 20.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, the first wireless device or device 100 may include the processor 102 connected to the transceiver 106, and the memory 104. The memory 104 may include at least one program for performing operations related to the embodiments described with reference to FIGS. 16 to 19.

The processor 102 may detect entry into a specific area by controlling the transceiver 106, predict whether travel of a first-type object located in the specific area is obstructed by a first travel path of the device in the specific area, and based on the prediction of obstruction of the travel of the first-type object and reception of a message including a second travel path related to a second-type object which is the same as the device, change the first travel path to a third travel path following the second travel path.

Alternatively, a processing device for controlling the device, which includes the processor 102 and the memory 104 may be configured. In this case, the processing device may include at least one processor and at least one memory connected to the at least one processor and storing instructions which, when executed by the at least one processor, cause the terminal to detect entry into a specific area, predict whether travel of a first-type object located in the specific area is obstructed by a first travel path of the device in the specific area, and based on the prediction of obstruction of the travel of the first-type object and reception of a message including a second travel path related to a second-type object which is the same as the device, change the first travel path to a third travel path following the second travel path.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Specifically, the second wireless device or network 200 may include the processor 202 connected to the transceiver or RF transceiver 206, and the memory 204. The memory 204 may include at least one program for performing operations related to the embodiments described with reference to FIGS. 16 to 19.

The processor 202 may detect that the device enters a specific area by controlling the transceiver 206, predict whether travel of a first-type object located in the specific area is obstructed by a first travel path of the device in the specific area, and based on the prediction of obstruction of the travel of the first-type object and reception of a message including a second travel path related to a second-type object which is the same as the device, transmit, to the device, a message requesting changing of the first travel path to a third travel path following the second travel path.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of wireless devices to which the present disclosure is applied

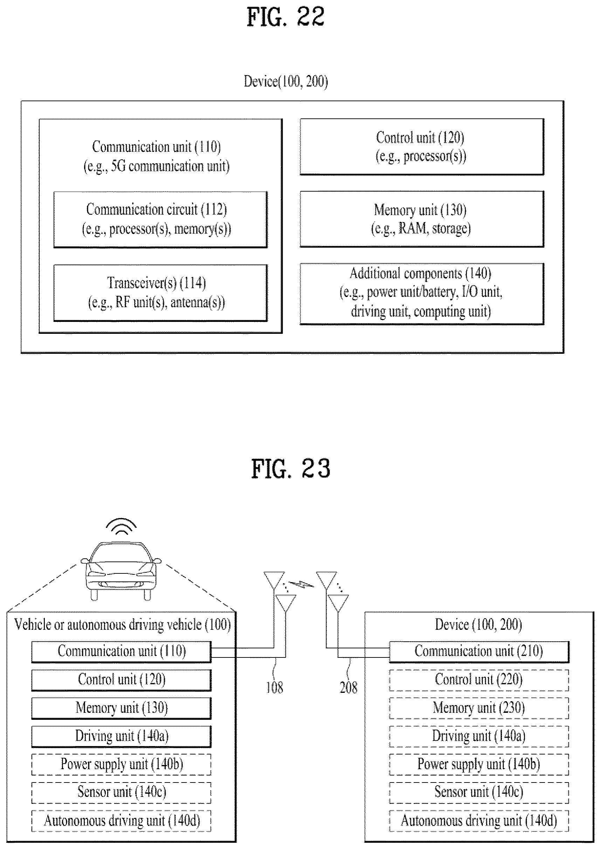

FIG. 22 illustrates another example of a wireless device applied to the present disclosure. The wireless device may be implemented in various forms according to a use-case/service (refer to FIG. 20)

Referring to FIG. 22, wireless devices 100 and 200 may correspond to the wireless devices 100 and 200 of FIG. 21 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 21. For example, the transceiver(s) 114 may include the one or more transceivers 106 and 206 and/or the one or more antennas 108 and 208 of FIG. 21. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 20), the vehicles (100b-1 and 100b-2 of FIG. 20), the XR device (100c of FIG. 20), the hand-held device (100d of FIG. 20), the home appliance (100e of FIG. 20), the IoT device (100f of FIG. 20), a digital broadcast terminal, a hologram device, a public safety device, an MTC device, a medicine device, a fintech device (or a finance device), a security device, a climate/environment device, the AI server/device (400 of FIG. 20), the BSs (200 of FIG. 20), a network node, etc. The wireless device may be used in a mobile or fixed place according to a use-example/service.

In FIG. 22, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

### Examples of vehicles or autonomous vehicles to which the present disclosure is applied

FIG. 23 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 23, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 20, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultraacoustic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology and may be implemented in standards such as LTE Cat NB1 and/or LTE Cat NB2 and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication and is not limited to the above-described names. As an example, ZigBee technology can generate personal area networks (PANs) related to small/low-power digital communication based on various standards such as IEEE 802.15.4 and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), and Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the present disclosure should be determined by the appended claims and their legal equivalents, not by the above description, and all changes coming within the meaning and equivalency range of the appended claims are intended to be embraced therein.

### INDUSTRIAL APPLICABILITY

The above-described embodiments of the present disclosure are applicable to various mobile communication systems.

## Claims

1. A method for determining a travel path by a device in a wireless communication system, the method comprising:
detecting entry into a specific area;
predicting whether travel of a first-type object located in the specific area is obstructed by a first travel path of the device in the specific area; and
based on the prediction of obstruction of the travel of the first-type object and reception of a message including a second travel path related to a second-type object which is the same as the device, changing the first travel path to a third travel path following the second travel path.

2. The method of claim 1, wherein the first-type object is a vulnerable road user (VRU), and the second-type object is an unmanned ground robot (UGR).

3. The method of claim 1, wherein based on a change in a travel state of the first-type object caused by the first travel path being predicted, the device predicts that the travel of the first-type object is obstructed by the first travel path.

4. The method of claim 1, further comprising receiving a VRU message including mobility information about the first-type object from the first-type object,
wherein whether the travel of the first-type object is obstructed is predicted based on the mobility information in the VRU message.

5. The method of claim 1, wherein based on the message including the second travel path related to the second-type object not being received, the device changes the first travel path to a travel path in which obstruction of the travel of the first-type object is not predicted, among a plurality of available travel paths in the specific area.

6. The method of claim 1, wherein based on the first travel path being changed to the third travel path, the device initiates transmission of a message including information about the third travel path and the first-type object.

7. The method of claim 1, wherein the device discontinues following the second travel path based on exiting the specific area.

8. The method of claim 1, wherein the specific area is an area where a sidewalk or a crosswalk for pedestrian movement is located.

9. A computer-readable recording medium having a program recorded thereon for performing the method of claim 1.

10. A device for determining a travel path in a wireless communication system, the device comprising:
a radio frequency (RF) transceiver; and
a processor connected to the RF transceiver,
wherein the processor controls the RF transceiver to detect entry into a specific area, predicts whether travel of a first-type object located in the specific area is obstructed by a first travel path of the device in the specific area, and based on the prediction of obstruction of the travel of the first-type object and reception of a message including a second travel path related to a second-type object which is the same as the device, changes the first travel path to a third travel path following the second travel path.

11. A processing device for controlling a device that determines a travel path in a wireless communication system, the processing device comprising:
at least one processor; and
at least one memory connected to the at least one processor and storing instructions that, when executed by the at least one processor, cause the terminal to detect entry into a specific area, predict whether travel of a first-type object located in the specific area is obstructed by a first travel path of the device in the specific area, and based on the prediction of obstruction of the travel of the first-type object and reception of a message including a second travel path related to a second-type object which is the same as the device, change the first travel path to a third travel path following the second travel path.

12. A method for setting a travel path for a device by a network in a wireless communication system, the method comprising:
detecting that the device enters a specific area;
predicting whether travel of a first-type object located in the specific area is obstructed by a first travel path of the device in the specific area; and
based on the prediction of obstruction of the travel of the first-type object and reception of a message including a second travel path related to a second-type object which is the same as the device, transmitting, to the device, a message requesting changing of the first travel path to a third travel path following the second travel path.

13. A computer-readable recording medium having a program recorded thereon for performing the method of claim 12.

14. A network for setting a travel path for a device in a wireless communication system, the network comprising:
a radio frequency (RF) transceiver; and
a processor connected to the RF transceiver,
wherein the processor detects that the device enters a specific area, predicts whether travel of a first-type object located in the specific area is obstructed by a first travel path of the device in the specific area, and based on the prediction of obstruction of the travel of the first-type object and reception of a message including a second travel path related to a second-type object which is the same as the device, transmits, to the device, a message requesting changing of the first travel path to a third travel path following the second travel path.

15. A processing device for controlling a network that sets a travel path for a device in a wireless communication system, the processing device comprising:
at least one processor; and
at least one memory connected to the at least one processor and storing instructions that, when executed by the at least one processor, cause the network to detect that the device enters a specific area, predict whether travel of a first-type object located in the specific area is obstructed by a first travel path of the device in the specific area, and based on the prediction of obstruction of the travel of the first-type object and reception of a message including a second travel path related to a second-type object which is the same as the device, transmit, to the device, a message requesting changing of the first travel path to a third travel path following the second travel path.
